# EUROPEAN PATENT APPLICATION

(11) **EP 3 290 191 A1**
(43) Date of publication of application: **07.03.2018**
(21) Application number: 17187322.7
(22) Date of filing: 22.08.2017
(51) Int. Cl.: B29C 67/00, B41J 3/407, B33Y 50/02

(54) **THREE-DIMENSIONAL SHAPING DEVICE AND THREE-DIMENSIONAL OBJECT**

(30) Priority: 31.08.2016 JP 2016169982
(71) Applicant: Mimaki Engineering Co., Ltd., Tomi-City, Nagano 389-0512 (JP)
(72) Inventor: KOUNO, Tohru, Tomi-city, Nagano 389-0512 (JP); OCHI, Kazuhiro, Tomi-city, Nagano 389-0512 (JP)
(74) Representative: Horn Kleimann Waitzhofer Patentanwälte PartG mbB

(57) **Abstract**

A three-dimensional shaping device that discharges an ultraviolet curing ink from an ink jet head toward a working surface and curing the ink to shape a three-dimensional object on the working surface; the three-dimensional shaping device includes a control unit that executes a shaping control related to shaping of the three-dimensional object; and an input unit, connected to the control unit, for setting a shaping mode prepared in advance according to a shaping condition of the three-dimensional object; wherein the control unit executes the shaping control based on shaping data of the three-dimensional object including a color profile related to a hue of the three-dimensional object; the color profile is associated with the shaping mode; and when the shaping mode is set through the input unit, the control unit executes the shaping control based on the color profile associated with the set shaping mode.

## Description

### TECHNICAL FIELD

The present disclosure relates to a three-dimensional shaping device and a three-dimensional object.

### DESCRIPTION OF THE BACKGROUND ART

A three-dimensional shaping device that shapes a three-dimensional object by layering a plurality of layered shaping materials in a layering direction on a working surface is known. In such a three-dimensional shaping device, an ultraviolet curing type ink that cures when irradiated with ultraviolet light, for example, is used as a functional ink, where such ultraviolet curing type ink is cured to obtain a shaping material. Some three-dimensional objects shaped by such three-dimensional shaping device are performed with coloring. A three-dimensional object in which a building model shaped as a three-dimensional object is performed with a painting process, as described in for example, Japanese Unexamined Patent Publication No. 2004-155007, is known for such three-dimensional object performed with coloring.

### SUMMARY

A three-dimensional shaping device that shapes a surface layer of a three-dimensional object using a colored ultraviolet curing type ink is provided for the three-dimensional shaping device that shapes the colored three-dimensional object. When shaping such three-dimensional object, the three-dimensional shaping device carries out shaping based on shaping data of the three-dimensional object, and the shaping data includes color data of RGB color, CMYK color, and the like related to a hue of the three-dimensional object. A three-dimensional object in which the reproduciblity of a hue of a real object, which becomes the basis of the three-dimensional object, is high, or a three-dimensional object in which coloring suited for the type of three-dimensional object is performed is desired for the three-dimensional object.

However, the color data included in the shaping data does not take into consideration a shaping condition such as the type of three-dimensional object, and the like, and thus it is difficult to carry out the coloring suited for the three-dimensional object.

The present disclosure thus provides a three-dimensional shaping device capable of carrying out coloring suited for a three-dimensional object, and a three-dimensional object.

A three-dimensional shaping device of the present disclosure relates to a three-dimensional shaping device that discharges functional ink from a liquid droplet discharging head toward a working surface and curing the functional ink to shape a three-dimensional object on the working surface; the three-dimensional shaping device including a control unit that executes a shaping control related to shaping of the three-dimensional object; and an input unit, connected to the control unit, for setting a shaping mode prepared in advance according to a shaping condition of the three-dimensional object; where the control unit executes the shaping control based on shaping data of the three-dimensional object including a color profile related to a hue of the three-dimensional object; the color profile is associated with the shaping mode; and when the shaping mode is set through the input unit, the control unit executes the shaping control based on the color profile associated with the set shaping mode.

According to such configuration, the color profile suited for the shaping mode is set by setting the shaping mode through the input unit. The coloring suited for the three-dimensional object can be carried out as the three-dimensional object is shaped based on the shaping data including the color profile associated with the shaping mode. For example, if the three-dimensional object is a figure, a figure mode is prepared for the shaping mode, and the figure is shaped based on the color profile best suited for the figure, so that a vivid coloring suited for the figure can be carried out. The shaping mode may be prepared in plurals, and the color profile may also be prepared in plurals according to the plurality of shaping modes.

When a real object to become a basis of the three-dimensional object is provided, the color profile is preferably generated such that the three-dimensional object and the real object have the same hue under the same environmental light.

According to such configuration, the reproducibility of the three-dimensional object with respect to the real object is assumed to be high.

Furthermore, the three-dimensional shaping device further includes a display unit that displays information related to the shaping of the three-dimensional object; where the control unit causes the display unit to display a shaping model of the three-dimensional object and to display an index (indicator) related to a progress status of the three-dimensional object in association with the shaping model.

According to such configuration, the progress status of the three-dimensional object can be grasped by visually recognizing the display unit. Thus, even if the shaping of the plurality of three-dimensional objects is stopped in the middle, for example, the three-dimensional object, of which shaping is completed, and the three-dimensional object, of which shaping is not completed, can be grasped by visually recognizing the display unit. Thus, the three-dimensional object, of which shaping is completed, can be taken out, and the three-dimensional object, of which shaping is not completed, can be reshaped. Furthermore, a case of stopping the shaping of the three-dimensional object in the middle includes a case of arbitrarily stopping the shaping of the three-dimensional object to take out the desired three-dimensional object, of which shaping is completed, a case in which the shaping of the three-dimensional object is stopped due to error, or the like.

The index preferably includes at least either one of a shaping completed index indicating that the shaping of the three-dimensional object is completed and a shaping progress index indicating a progress status of the shaping of the three-dimensional object by ratio.

According to such configuration, the completion of the shaping can be grasped by visually recognizing the shaping completed index. Furthermore, the progress of shaping can be grasped by visually recognizing the shaping progress index. A color of the shaping model, for example, may be adopted for the shaping completed index, and the shaping model, of which shaping is completed, and the shaping model, of which shaping is not completed, may be color code displayed. The shaping progress index is, for example, a display in "%". Furthermore, the shaping completed index and the shaping progress index may be a mark, and are not particularly limited.

The three-dimensional object is preferably shaped by layering a layered shaping material obtained by curing the functional ink on the working surface; and the control unit preferably determines the progress status of the shaping of the three-dimensional object based on the number of layers of the shaping material.

According to such configuration, the progress status of the shaping of the three-dimensional object can be accurately determined by the number of layering of the shaping material as the thickness in the layering direction of the shaping material is thin.

The three-dimensional object is preferably shaped by layering a layered shaping material obtained by curing the functional ink on the working surface; the three-dimensional shaping device further includes a mounting table including the working surface; a mounting table driving unit for moving the mounting table in a layering direction; and a height detection sensor for detecting height in the layering direction of the mounting table; and the control unit preferably determines the progress status of the shaping of the three-dimensional object based on the height of the mounting table detected by the height detection sensor.

According to such configuration, the progress status of the shaping of the three-dimensional object can be more reliably determined based on the height of the mounting table, to become a physical displacement amount.

When a plurality of three-dimensional objects is shaped on the working surface, if the shaping is interrupted in the middle of shaping all the three-dimensional objects, the control unit preferably executes anew the shaping control related to the shaping of any three-dimensional object whose shaping is not completed, excluding any three-dimensional object whose shaping is completed, of the plurality of three-dimensional objects.

According to such configuration, by excluding the three-dimensional object, of which shaping is completed, the incomplete three-dimensional object can be reshaped anew so as to efficiently shape the incomplete three-dimensional object, of which shaping is not completed.

A three-dimensional object of the present disclosure relates to a three-dimensional object shaped by the three-dimensional shaping device described above, the three-dimensional object including an interior shaping material having a white interior; and a surface shaping material formed on a surface of the interior shaping material and colored based on the color profile.

According to such configuration, the interior shaping material is white, and thus the color profile used for the two-dimensional printing can be used for the color profile used for the coloring of the surface shaping material.

### BRIEF DESCRIPTION OF THE DRAWINGS

FIG. 1 is a cross-sectional view showing a three-dimensional object shaped by a three-dimensional shaping device according to a first embodiment.
FIG. 2 is a schematic configuration view showing a schematic configuration of the three-dimensional shaping device according to the first embodiment.
FIG. 3 is a schematic view showing a plurality of three-dimensional objects shaped on a mounting table of the three-dimensional shaping device according to the first embodiment.
FIG. 4 is a view of a mode selection screen displayed on a display unit of the three-dimensional shaping device according to the first embodiment.
FIG. 5 is an explanatory view related to shaping data used in the three-dimensional shaping device according to the first embodiment.
FIG. 6 is a view of a screen related to a progress status of a three-dimensional object displayed on the display unit of the three-dimensional shaping device according to the first embodiment.
FIG. 7 is a schematic configuration view showing a schematic configuration of a three-dimensional shaping device according to a second embodiment.
FIG. 8 is an explanatory view related to rearrangement at the time of reshaping of a three-dimensional shaping device according to a third embodiment.

### DETAILED DESCRIPTION OF EMBODIMENTS

Hereinafter, embodiments according to the present disclosure will be described in detail based on the drawings. It should be noted that the present disclosure is not limited by the embodiments. Components in the following embodiments include components that can be replaced by those skilled in the art and are easy, or are substantially the same. Furthermore, the components described below can be appropriately combined, or if a plurality of embodiments are provided, each embodiment can be combined.

### [First embodiment]

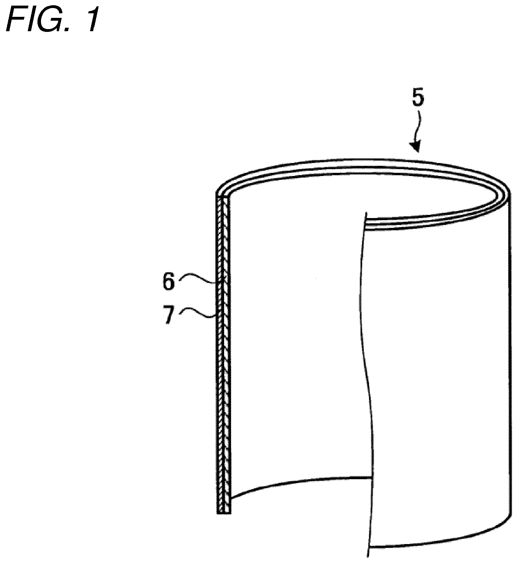

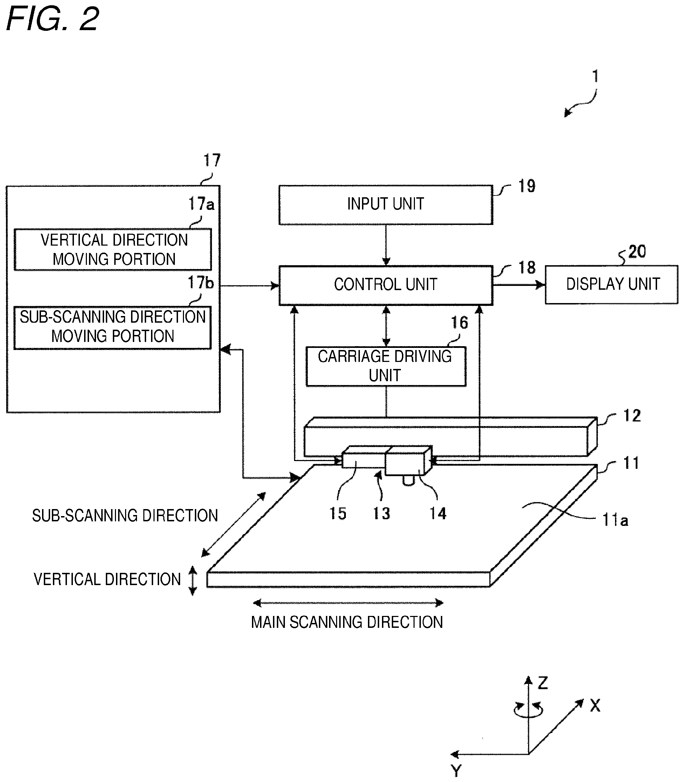

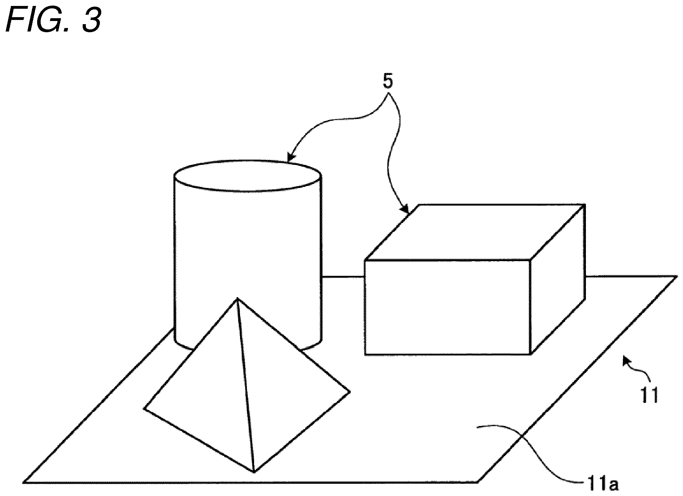

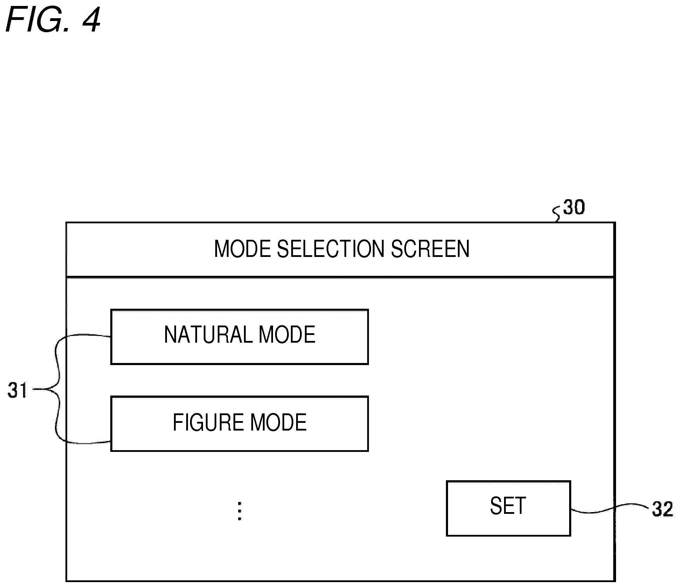

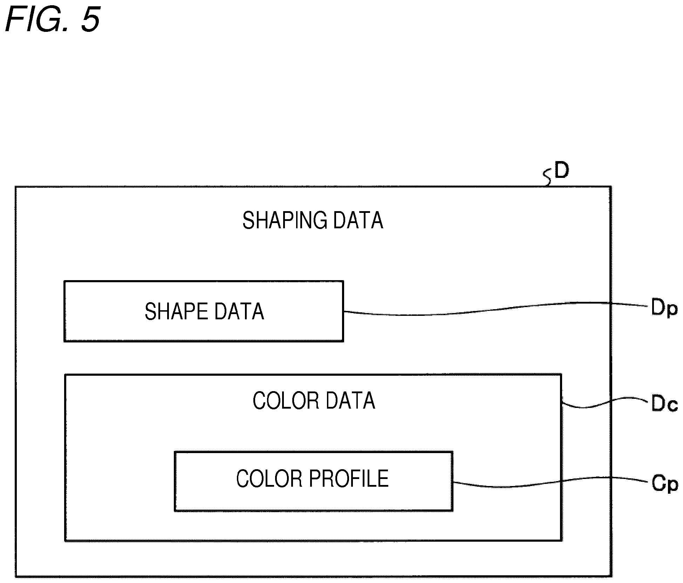

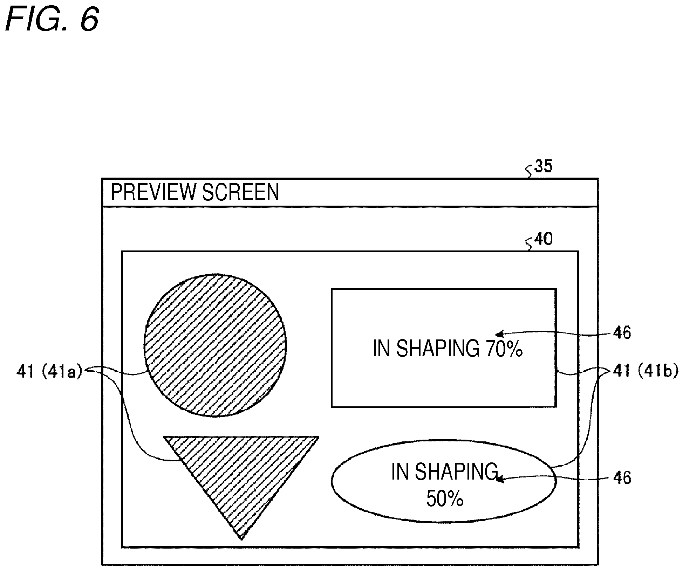

FIG. 1 is a cross-sectional view showing a three-dimensional object shaped by a three-dimensional shaping device according to a first embodiment. FIG. 2 is a schematic configuration view showing a schematic configuration of the three-dimensional shaping device according to the first embodiment. FIG. 3 is a schematic view showing a plurality of three-dimensional objects shaped on a mounting table of the three-dimensional shaping device according to the first embodiment. FIG. 4 is a view of a mode selection screen displayed on a display unit of the three-dimensional shaping device according to the first embodiment. FIG. 5 is an explanatory view related to shaping data used in the three-dimensional shaping device according to the first embodiment. FIG. 6 is a view of a screen related to a progress status of a three-dimensional object displayed on the display unit of the three-dimensional shaping device according to the first embodiment.

A three-dimensional shaping device 1 according to the first embodiment is a 3D printer of a so-called ink jet method that uses an ink jet head (liquid droplet discharging head) 14. The three-dimensional shaping device 1 shapes a three-dimensional object 5 by layering a layered shaping material from a lower side toward an upper side in a vertical direction. Prior to describing the three-dimensional shaping device 1, a three-dimensional object 5 will be described with reference to FIG. 1.

As shown in FIG. 1, the three-dimensional object 5 shaped by the three-dimensional shaping device 1 has the surface thereof subjected to coloring, where a cylindrical three-dimensional object 5 is illustrated in FIG. 1 by way of example. The three-dimensional object 5 includes an interior shaping material 6, and a surface shaping material 7 formed on a surface layer of the interior shaping material 6. The interior shaping material 6 is an interior structure of the three-dimensional object 5. The interior shaping material 6 becomes a base layer of the surface shaping material 7, and is colored in white. The surface shaping material 7 is formed on the surface layer of the interior shaping material 6, which becomes the white base layer. The surface shaping material 7 is colored based on color data embedded with a color profile of the shaping data, to be described later. Thus, the three-dimensional object 5 has the colored surface shaping material 7 formed on the surface layer of the interior shaping material 6, which becomes the white base layer.

As described above, the three-dimensional object 5 is shaped by layering the layered shaping material, and hence the layered shaping material includes at least one of the regions of a region to become one part of the interior shaping material 6 and a region to become one part of the surface shaping material 7. The three-dimensional object 5 including the interior shaping material 6 and the surface shaping material 7 is then shaped by layering the layered shaping material.

The three-dimensional shaping device 1 will now be described with reference to FIG. 2. As shown in FIG. 2, the three-dimensional shaping device 1 includes a mounting table 11, a Y bar 12, a carriage 13, an ink jet head 14, an ultraviolet irradiator 15, a carriage driving unit 16, a mounting table driving unit 17, a control unit 18, an input unit 19, and a display unit 20.

The mounting table 11 is formed to a plate shape extending in a horizontal plane, where an upper surface in the vertical direction serves as a working surface 11a. The working surface 11a is a surface parallel to the horizontal plane, and is formed flat. The working surface 11a is a plane where the three-dimensional object 5 is shaped by layering the layered shaping material, and a plurality of three-dimensional objects 5 can be simultaneously shaped, as shown in FIG. 3. The working surface 11a of the mounting table 11 is, for example, formed to a substantially rectangular shape, but is not limited thereto.

The Y bar 12 is arranged with a predetermined spacing on a vertically upper side of the mounting table 11. The Y bar 12 is linearly arranged along a main scanning direction parallel to a horizontal direction (Y axis). The Y bar 12 guides the carriage 13 that reciprocates along the main scanning direction.

The carriage 13 is held by the Y bar 12, and can reciprocate in the main scanning direction along the Y bar 12. The carriage 13 is movement-controlled in the main scanning direction. Furthermore, the carriage 13 holds the ink jet head 14 and the ultraviolet irradiator 15 on a surface facing the working surface 11 a of the mounting table 11 in the vertical direction.

The ink jet head 14 discharges the ultraviolet curing ink serving as the functional ink toward the working surface 11a. The ink jet head 14 is mounted on the carriage 13, and can reciprocate along the main scanning direction with the movement of the carriage 13 along the main scanning direction. The ink jet head 14 is connected to an ink tank (not illustrated) mounted on the carriage 13 by way of, for example, various types of ink flow paths, a regulator, a pump, and the like. The ink jet head 14 is arranged in plurals according to the type of ultraviolet curing ink used for the shaping of the three-dimensional object 5. The ink jet head 14 discharges the ultraviolet curing ink in the ink tank toward the working surface 11a of the mounting table 11 through the ink jet method.

For the type of ultraviolet curing ink, for example, coloring inks such as white ink, cyan (C), magenta (M), yellow (Y), and black (K), a transparent ink, and the like can be appropriately used according to the hue of the three-dimensional object 5 to shape. The ink jet head 14 is electrically connected to the control unit 18, so that the drive thereof is controlled by the control unit 18.

The ultraviolet irradiator 15 irradiates the ultraviolet curing ink discharged to the working surface 11a with ultraviolet light. The ultraviolet irradiator 15 is, for example, configured by an LED module, and the like capable of emitting ultraviolet light. The ultraviolet irradiator 15 is mounted on the carriage 13, and can reciprocate along the main scanning direction with the movement of the carriage 13 along the main scanning direction. The ultraviolet irradiator 15 is electrically connected to the control unit 18, so that the drive thereof is controlled by the control unit 18.

The carriage driving unit 16 is a driving device that relatively reciprocates (scans) the carriage 13, that is, the ink jet head 14 and the ultraviolet irradiator 15 in the main scanning direction with respect to the Y bar 12. The carriage driving unit 16 is configured to include, for example, a transmission mechanism such as a transportation belt coupled to the carriage 13, and a drive source such as an electrical motor for driving the transportation belt, and converts a power generated by the drive source to a power for moving the carriage 13 along the main scanning direction through the transmission mechanism, and reciprocates the carriage 13 along the main scanning direction. The carriage driving unit 16 is electrically connected to the control unit 18, so that the drive thereof is controlled by the control unit 18.

As shown in FIG. 2, the mounting table driving unit 17 includes a vertical direction moving portion 17a, and a sub-scanning direction moving portion 17b. The vertical direction moving portion 17a moves the mounting table 11 up and down along the vertical direction parallel to a Z axis to relatively move the working surface 11a formed on the mounting table 11 up and down along the relatively vertical direction with respect to the ink jet head 14. The mounting table driving unit 17 thus can move the working surface 11a closer to or away from the ink jet head 14, the ultraviolet irradiator 15, and the like in the vertical direction. That is, the mounting table driving unit 17 can relatively move the working surface 11a along the vertical direction with respect to the ink jet head 14 and the ultraviolet irradiator 15.

The sub-scanning direction moving portion 17b moves the mounting table 11 in the sub-scanning direction parallel to an X axis orthogonal to the main scanning direction to relatively reciprocate the working surface 11a formed on the mounting table 11 along the sub-scanning direction with respect to the ink jet head 14. The mounting table driving unit 17 thus can reciprocate the working surface 11a along the sub-scanning direction with respect to the ink jet head 14, the ultraviolet irradiator 15, and the like. That is, the sub-scanning direction moving portion 17b can relatively reciprocate the ink jet head 14 and the ultraviolet irradiator 15, and the working surface 11a in the sub-scanning direction. In the first embodiment, the sub-scanning direction moving portion 17b moves the mounting table 11 in the sub-scanning direction, but the present disclosure is not limited thereto, and may move the ink jet head 14 and the ultraviolet irradiator 15 in the sub-scanning direction for every Y bar 12.

The control unit 18 controls each unit of the three-dimensional shaping device 1 including the ink jet head 14, the ultraviolet irradiator 15, the carriage driving unit 16, the mounting table driving unit 17, and the like. The control unit 18 is configured by hardware such as an arithmetic device and a memory, and a program for realizing predetermined functions thereof. The control unit 18 controls the ink jet head 14 to control discharging amount, discharging timing, discharging period, and the like of the ultraviolet curing ink. The control unit 18 controls the ultraviolet irradiator 15 to control an intensity, exposure timing, exposure period, and the like of the ultraviolet light to emit. The control unit 18 controls the carriage driving unit 16 to control the relative movement of the carriage 13 along the main scanning direction. The control unit 18 controls the mounting table driving unit 17 to control the relative movement of the mounting table 11 along the vertical direction and the sub-scanning direction.

The input unit 19 is connected to the control unit 18, and is provided to input the shaping data related to the shaping of the three-dimensional object 5 and set the shaping condition of the three-dimensional object 5. The input unit 19 is, for example, configured by devices such as PC, various terminals, and the like wire/wireless connected to the control unit 18.

The display unit 20 is connected to the control unit 18, and is provided to display information related to the shaping of the three-dimensional object 5. The display unit 20 is, for example, configured by a device such as a display. A touch panel display, which is integrated with the input unit 19, may be applied for the display unit 20.

Next, a control (hereinafter referred to as shaping control) related to the shaping of the three-dimensional object 5 by the three-dimensional shaping device 1 described above will be described. The control unit 18 of the three-dimensional shaping device 1 executes the shaping control related to the shaping of the three-dimensional object 5 based on shaping data D of the three-dimensional object 5. As shown in FIG. 5, the shaping data D includes shape data Dp such as polygon data, and the like, which are data related to the shape of the three-dimensional object 5, and color data Dc of RGB color, CMYK color, or the like, which are data related to the hue of the surface shaping material 7 of the three-dimensional object 5.

Furthermore, as the three-dimensional shaping device 1 can simultaneously shape a plurality of three-dimensional objects 5 on the mounting table 11, the control unit 18 arranges and sets the plurality of pieces of shaping data on a work setting region 40 corresponding to the working surface 11a of the mounting table 11 (see FIG. 6). In this case, the control unit 18 is arranged with a plurality of pieces of shaping data D so that the plurality of three-dimensional objects 5 are efficiently shaped.

The control unit 18 then creates slice data based on the shaping data D arranged on the work setting region 40. The slice data is data for shaping the layered shaping material configuring the three-dimensional object 5. The slice data includes at least either one of the data for shaping a region of one part of the interior shaping material 6 or the data for shaping a region of one part of the surface shaping material 7. The control unit 18 shapes the layered shaping material, and also shaping controls each unit so as to layer the layered shaping material based on the slice data to shape the three-dimensional object 5.

The color data Dc included in the shaping data is data in which a color profile Cp is embedded. The color profile Cp is data related to a color that does not rely on the device when a predetermined color space is assumed as a reference, and includes, for example, a profile provided from a manufacturing company that manufactures the three-dimensional shaping device 1 in addition to the ICC (International Colo Consortium) profile.

The color profile Cp provided from the manufacturing company is prepared in plurals according to the shaping condition of the three-dimensional object 5, specifically, the type of shaping of the three-dimensional object 5. The color profile Cp is generated such that when the real object to become the basis of the three-dimensional object 5 is provided, the three-dimensional object 5 and the real object have the same hue under the same environmental light.

The color profile Cp is associated with the shaping mode prepared in advance. The shaping mode sets the shaping condition of the three-dimensional object 5 to be shaped, and is stored in a storage device of the control unit 18. A natural mode of representing the three-dimensional object 5 with a natural texture, a figure mode of representing a figure, which is the three-dimensional object 5, with a vivid color tone and the like, for example, are prepared for the shaping mode. The color profile Cp associated with the shaping mode is, for example, prepared with a profile corresponding to the natural mode and also prepared with a profile corresponding to the figure mode, and is stored in the storage device of the control unit 18. The shaping mode is set through the input unit 19 before the shaping of the three-dimensional object 5.

The control unit 18 displays a mode selection screen 30 shown in FIG. 4 on the display unit 20 as a screen for setting the shaping mode. In the mode selection screen 30 is displayed a selecting display region 31 for selecting each shaping mode and a setting display region 32 for setting the selected shaping mode. When the shaping mode displayed on the mode selection screen 30 of the display unit 20 is selected through the input unit 19, the control unit 18 sets the color profile Cp associated with the selected shaping mode, and executes the coloring of the surface shaping material 7 of the three-dimensional object 5 based on the set color profile Cp.

Next, a preview screen 35, which is a screen related to the progress status of the three-dimensional object 5 displayed on the display unit 20 of the three-dimensional shaping device 1 during the shaping of the three-dimensional object 5 will be described with reference to FIG. 6. In the preview screen 35 is displayed a work setting region 40, which is a region corresponding to the working surface 11a of the mounting table 11, and shaping models 41 of a plurality of three-dimensional objects 5 arranged on the work setting region 40. An index related to the progress status of the three-dimensional object 5 is displayed in association with the shaping model 41 in the preview screen 35.

Specifically, the index related to the progress status of the three-dimensional object 5 includes a shaping completed index indicating that the shaping of the three-dimensional object 5 is completed, and a shaping progress index 46 indicating the progress status of the shaping of the three-dimensional object 5 by ratio. The shaping completed index is an index in which a shaping model 41a, of which shaping is completed, and an incomplete shaping model 41b, of which shaping is not completed, are color coding displayed. The shaping progress index 46 displays the progress status of the three-dimensional object 5 in percentage (%). Thus, during the shaping of the three-dimensional object 5, the control unit 18 displays the preview screen 35 on the display unit 20 and also provides the shaping completed index or the shaping progress index 46 to the shaping model 41 to notify the progress status of the three-dimensional object 5.

The control unit 18 determines the progress status of the shaping of the three-dimensional object 5 based on the number of layering of the layered shaping material. That is, the control unit 18 determines which slice data in which layer the slice data currently being shaped corresponds to, and determines that the shaping of the three-dimensional object 5 is completed if the layer of the determined slice data reached the number of layers at which the three-dimensional object 5 becomes complete. Furthermore, the control unit 18 determines the progress status of the three-dimensional object 5 in percentage (%) from the ratio of the number of layering of the shaped layered shaping material with respect to the entire number of layers at which the three-dimensional object 5 becomes complete based on the layer of the slice data currently being shaped.

Thus, as the control unit 18 displays the index related to the progress status of the shaping of the three-dimensional object 5 on the display unit 20, even if the shaping of the plurality of three-dimensional objects 5 is stopped in the middle, for example, the three-dimensional object 5, of which shaping is completed, and the three-dimensional object 5, of which shaping is not completed, can be grasped by visually recognizing the display unit 20. Thus, the three-dimensional object 5, of which shaping is completed, can be taken out, and the three-dimensional object 5, of which shaping is not completed, can be reshaped. Furthermore, a case of stopping the shaping of the three-dimensional object 5 in the middle includes a case of arbitrarily stopping the shaping of the three-dimensional object 5 to take out the desired three-dimensional object 5, of which shaping is completed, a case in which the shaping of the three-dimensional object 5 stopped due to error, or the like.

Therefore, according to the first embodiment, the color profile Cp suited for the shaping mode is set by setting the shaping mode through the input unit 19. The coloring suited for the three-dimensional object 5 can be carried out as the three-dimensional object 5 is shaped based on the shaping data D including the color profile Cp associated with the shaping mode. For example, if the three-dimensional object 5 is a figure, a figure mode is prepared for the shaping mode, and the figure is shaped based on the color profile Cp best suited for the figure, so that a vivid coloring suited for the figure can be carried out.

Furthermore, when the real object to become the basis of the three-dimensional object 5 is provided, the reproducibility of the three-dimensional object 5 with respect to the real object can be enhanced by generating the color profile Cp such that the three-dimensional object 5 and the real object have the same hue under the same environmental light.

Moreover, according to the first embodiment, by displaying the index related to the progress status of the three-dimensional object 5 on the display unit 20, the progress status of the three-dimensional object 5 can be grasped by visually recognizing the display unit 20.

According to the first embodiment, the completion of the shaping of the three-dimensional object 5 can be grasped by visually recognizing the shaping completed index, and the progress of the shaping of the three-dimensional object 5 can be grasped by visually recognizing the shaping progress index 46 by displaying the shaping completed index and the shaping progress index 46 on the display unit 20.

Furthermore, according to the first embodiment, the control unit 18 determines the progress status of the shaping of the three-dimensional object 5 based on the number of layering of the layered shaping material, and hence the thickness in the layering direction of the shaping material is thin, so that the progress status of the shaping of the three-dimensional object 5 can be accurately determined by the number of layering of the shaping material.

In addition, according to the first embodiment, the interior shaping material 6 is white, and thus the color profile used for the two-dimensional printing can be used for the color profile Cp used for the coloring of the surface shaping material 7.

### [Second embodiment]

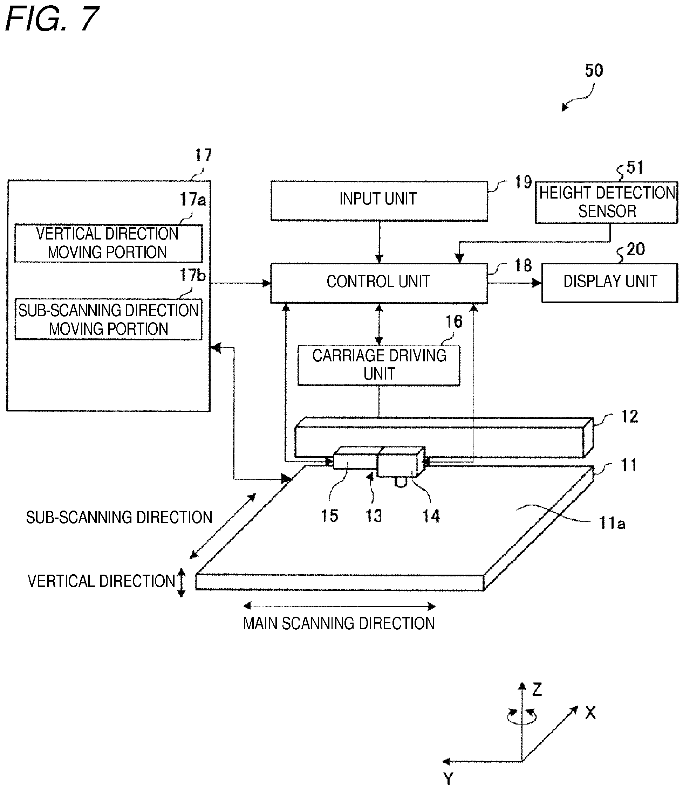

A three-dimensional shaping device 50 according to a second embodiment will now be described with reference to FIG. 7. In the second embodiment, to avoid redundant explanation, the portion different from the first embodiment will be described, and the portion having a configuration similar to the first embodiment will be described by denoting the same reference symbol. FIG. 7 is a schematic configuration view showing a schematic configuration of a three-dimensional shaping device according to a second embodiment.

The three-dimensional shaping device 50 of the second embodiment determines the progress status of the shaping of the three-dimensional object 5 based on a height in the vertical direction (layering direction) of the mounting table 11. Specifically, the three-dimensional shaping device 50 includes a height detection sensor 51 that detects the height in the vertical direction of the mounting table 11, and the height detection sensor 51 is electrically connected to the control unit 18.

The height detection sensor 51 detects the height in the vertical direction of the mounting table 11 with respect to a reference plane set in advance. Specifically, the mounting table 11 has the working surface 11a of the mounting table 11 move toward the lower side in the vertical direction from an initial position as the layered shaping material is layered, so that the distance between the working surface 11a and the ink jet head 14 relatively separate. The height detection sensor 51 detects the movement amount toward the lower side in the vertical direction of the mounting table 11 having the initial position of the mounting table 11 as a reference as the height of the mounting table 11.

The control unit 18 determines the progress status of the shaping of the three-dimensional object 5 based on the height of the mounting table 11 detected by the height detection sensor 51. That is, the control unit 18 detects the current height of the mounting table 11 during the shaping with the height detection sensor 51, and determines that the shaping of the three-dimensional object 5 is complete if the detected height of the mounting table 11 reached the height at which the three-dimensional object 5 becomes complete. Furthermore, the control unit 18 determines the progress status of the three-dimensional object 5 in percentage (%) from the ratio of the current height of the mounting table 11 with respect to the height (entire height) at which the three-dimensional object 5 becomes completed based on the current height of the mounting table 11 during the shaping.

Therefore, according to the second embodiment, the progress status of the shaping of the three-dimensional object 5 can be more reliably determined based on the height of the mounting table 11, to become a physical displacement amount, using the height detection sensor 51.

### [Third embodiment]

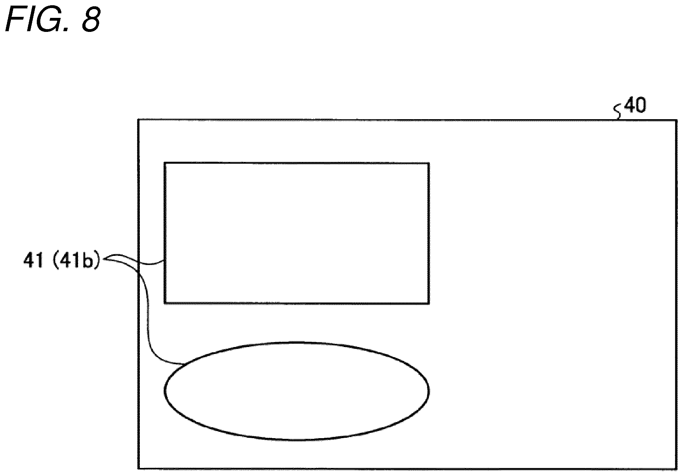

A three-dimensional shaping device 1, 50 according to a third embodiment will now be described with reference to FIG. 8. In the third embodiment, to avoid redundant explanation, the portion different from the first and second embodiments will be described, and the portion having a configuration similar to the first and second embodiments will be described by denoting the same reference symbol. FIG. 8 is an explanatory view related to rearrangement at the time of reshaping of a three-dimensional shaping device according to a third embodiment.

When the shaping of all the three-dimensional objects 5 is stopped in the middle, the three-dimensional shaping device 1, 50 of the third embodiment reshapes the three-dimensional object 5, of which shaping is incomplete, excluding the three-dimensional object 5, of which shaping is completed, based on the determination related to the progress status of the shaping of the three-dimensional object 5. That is, the control unit 18 of the three-dimensional shaping device 1, 50 rearranges and sets the shaping data D (shaping model 41b) of the three-dimensional object 5, of which shaping is incomplete, on the work setting region 40 corresponding to the working surface 11a of the mounting table 11 (see FIG. 8), and executes the shaping control anew based on the shaping data D of the set incomplete three-dimensional object 5. In this case, the control unit 18 can arrange a plurality of pieces of shaping data D so as to efficiently shape the incomplete three-dimensional object 5 as the three-dimensional object 5, of which shaping is completed, is excluded.

Therefore, according to the third embodiment, by excluding the three-dimensional object 5, of which shaping is completed, the incomplete three-dimensional object 5 can be reshaped anew so as to efficiently shape the incomplete three-dimensional object 5, of which shaping is not completed.

## Claims

1. A three-dimensional shaping device (1, 50) configured to discharge a functional ink from a liquid droplet discharging head (14) toward a working surface (11a) and to cure the functional ink to shape a three-dimensional object (5) on the working surface (11a); the three-dimensional shaping device (1,50) comprising:
a control unit (18) configured to execute a shaping control related to shaping of the three-dimensional object (5); and
an input unit (19), connected to the control unit (18), for setting a shaping mode prepared in advance according to a shaping condition of the three-dimensional object (5); wherein
the control unit (18) is configured to execute the shaping control based on shaping data of the three-dimensional object (5) including a color profile related to a hue of the three-dimensional object (5),
the color profile is associated with the shaping mode, and
when the shaping mode is set through the input unit (19), the control unit (18) is configured to execute the shaping control based on the color profile associated with the set shaping mode.

2. The three-dimensional shaping device (1, 50) according to claim 1, wherein when a real object to become a basis of the three-dimensional object (5) is provided, the color profile is generated such that the three-dimensional object (5) and the real object have the same hue under the same environmental light.

3. The three-dimensional shaping device (1, 50) according to claim 1 or 2, further comprising a display unit (20) configured to display information related to the shaping of the three-dimensional object (5), wherein the control unit (18) is configured to cause the display unit (20) to display a shaping model of the three-dimensional object (5) and to display an index related to a progress status of the three-dimensional object (5) in association with the shaping model.

4. The three-dimensional shaping device (1, 50) according to claim 3, wherein the index includes at least either one of a shaping completed index indicating that the shaping of the three-dimensional object (5) is completed and a shaping progress index indicating a progress status of the shaping of the three-dimensional object (5) by ratio.

5. The three-dimensional shaping device (1,50) according to claim 4, wherein
the three-dimensional object (5) is shaped by layering a layered shaping material obtained by curing the functional ink on the working surface (11a), and
the control unit (18) is configured to determine the progress status of the shaping of the three-dimensional object (5) based on the number of layers of the shaping material.

6. The three-dimensional shaping device (1,50) according to claim 4, wherein
the three-dimensional object (5) is shaped by layering a layered shaping material obtained by curing the functional ink on the working surface (11a), and
the three-dimensional shaping device (1, 50) further includes:
a mounting table (11) including the working surface (11a);
a mounting table driving unit (17) for moving the mounting table (11) in a layering direction; and
a height detection sensor (51) for detecting height, in the layering direction, of the mounting table (11), and
the control unit (18) is configured to determine the progress status of the shaping of the three-dimensional object (5) based on the height of the mounting table (11) detected by the height detection sensor (51).

7. The three-dimensional shaping device (1, 50) according to any one of claims 1 to 6, wherein when a plurality of three-dimensional objects (5) is shaped on the working surface (11a), if the shaping is interrupted in the middle of shaping all the three-dimensional objects (5), the control unit (18) is configured to execute anew the shaping control related to the shaping of any three-dimensional object (5) whose shaping is not completed, excluding any three-dimensional object (5) whose shaping is completed, of the plurality of three-dimensional objects (5).

8. A three-dimensional object (5) shaped by the three-dimensional shaping device (1, 50) according to any one of claims 1 to 7, the three-dimensional object (5) comprising :
an interior shaping material (6) having a white interior; and
a surface shaping material (7) formed on a surface of the interior shaping material (6) and colored based on the color profile.
